# EUROPÄISCHE PATENTSCHRIFT

(11) **EP 1 364 607 B1**
(45) Veröffentlichungstag und Bekanntmachung des Hinweises auf die Patenterteilung: **27.09.2006**
(21) Anmeldenummer: 03003473.0
(22) Anmeldetag: 15.02.2003
(51) Int. Cl.: A47K 7/02

(54) **Schwammhalter**
Sponge holder
Support d'éponge

(30) Priorität: 25.02.2002 DE 20202905 U
(43) Veröffentlichungstag der Anmeldung: 26.11.2003
(73) Patentinhaber: KOZIOL GESCHENKARTIKEL GMBH, D-64711 Erbach/Odenwald (DE)
(72) Erfinder: Schmitt, Franz, Dipl.-Designer, 38104 Braunschweig (DE)
(74) Vertreter: Chambosse, Hans-Joachim

(56) Entgegenhaltungen:
- FR-A- 2 763 495
- US-A- 5 277 389

## Beschreibung

Die Erfindung betrifft eine Vorrichtung zum lösbaren Halten von Schwämmen außerhalb ihrer Benutzung, und zwar sowohl im Haushalt als auch im Gewerbe. Üblicherweise werden solche Schwämme nach ihrem Einsatz im nassen, zumindest noch feuchten Zustand auf einer Arbeitsfläche oder in einer Schale abgelegt. Dabei besteht der erhebliche Nachteil, daß der Schwamm im Bereich seiner Auflagefläche nicht bzw. nur ungenügend der Atmosphäre zugänglich ist und dadurch in diesem Bereich nicht, jedenfalls aber nur wesentlich langsamer trocknen kann als in seinen der Atmosphäre unmittelbar ausgesetzten Bereichen. Dadurch kommt es erfahrungsgemäß besonders in diesem Teil der abgelegten Schwämme zur Keim- bzw. Sporenbildung, die auch angrenzende Bereiche des Schwamms erfassen können. Diese Gefahr besteht insbesondere, wenn der Schwamm, wie es häufig der Fall ist, vom Benutzer nicht oder ungenügend ausgedrückt nach der Benutzung abgelegt wird. Hinzu kommt der Platzbedarf für die Ablage des Schwamms auf dem Arbeitstisch bzw. der sonstigen Arbeitsfläche oder die Aufstellung der Schwammschale.

Aufgabe der vorliegenden Erfindung ist es deshalb, eine Vorrichtung zum Halten von Schwämmen ohne die vorgenannten Nachteile der bekannten Schwammablagen zu schaffen, bei der die Oberfläche des Schwamms weitestgehend frei der Atmosphäre ausgesetzt wird, wobei der Schwamm leicht in die Vorrichtung eingesetzt und daraus entnommen werden kann, zugleich aber zuverlässig gehalten wird.

Diese Aufgabe wird im wesentlichen dadurch gelöst, daß ein Schwammhalter, bestehend aus einem Schwammträger nach den kennzeichnenden Merkmalen des Anspruchs 1, mit einem als solchem bekannten Saughalter zu Anbringung an einer Wand oder sonstigen Befestigungsfläche verbunden ist. Vorteilhafte Ausgestaltungen und Weiterbildungen des erfindungsgemäßen Schwammhalters sind Gegenstand der Unteransprüche.

Ausführungsbeispiele der Erfindung werden nachstehend anhand von Abbildungen erläutert. Es zeigen:
- Fig. 1:: den erfindungsgemäßen Schwammhalter mit in sich starrem Schwammhalter und angesetztem Saughalter in der Seitenansicht von rechts;
- Fig. 2:: den Schwammhalter gemäß Fig. 1 in der Ansicht von den vorderen Enden der Haltearme des Schwammträgers her;
- Fig. 3:: den Schwammhalter gemäß Fig. 1, jedoch mit gegenüber dem unteren Schwammträger seitlich verschwenkbarem oberem Haltearm in der Seitenansicht von rechts;
- Fig. 4:: den Schwammhalter gemäß Fig. 3 in der Aufsicht von oben mit drei Schwenkstellungen des oberen Haltearms;
- Fig. 5:: den Schwammhalter mit vom unteren Haltearm hochklappbarem oberem Haltearm in der Seitenansicht von links;
- Fig. 6:: den Schwammhalter gemäß Fig. 5 mit abgeklapptem und hochgeklappten oberem Haltearm;
- Fig. 7:: einen Schwammhalter mit von der Haftfläche des Saughalters weg gerichteter Öffnung des Schwammträgers und in ihrem Querschnitt rechtwinkligen Haltearmen, in der Seitenansicht von rechts;
- Fig. 8:: einen Schwammhalter gemäß Fig. 7 mit im Querschnitt runden Haltearmen;
- Fig. 9:: den Schwammhalter mit eingesetztem Schwamm.

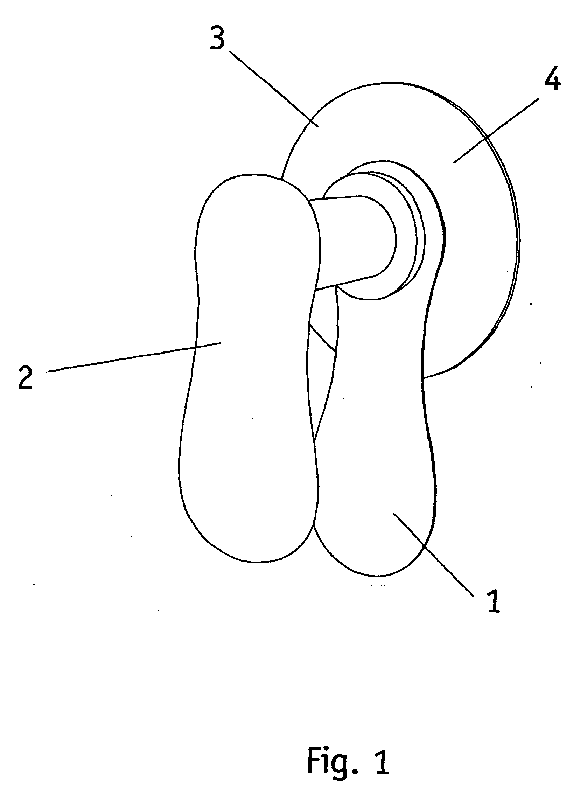

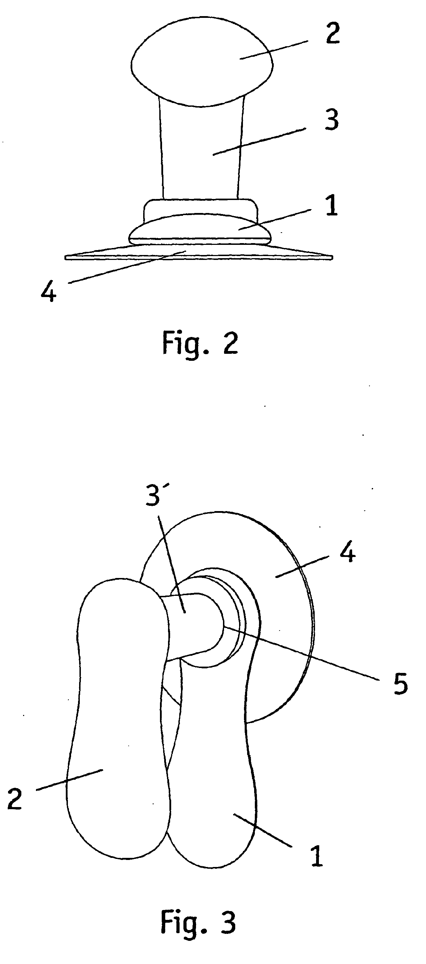

Der erfindungsgemäße Schwammhalter in der Ausführungsform gemäß Fig. 1 und 2 besteht aus dem Schwammträger mit den beiden weitgehend parallel zueinander angeordneten Haltearmen (1) und (2), die durch das Verbindungsstück/den Abstandhalter (3) mit definierter Länge starr verbunden sind. Unterhalb des unteren Haltearms (1) ist in der gedachten Achse des Verbindungsstücks (3) der an sich bekannte Saughalter (4) zur Befestigung des Schwammhalters an glatten Trageflächen wie Fliesen, Spiegeln, Glas- und Metallflächen angesetzt.

Der vom Schwammhalter aufzunehmende Schwamm wird zwischen die Haltearme (1) und (2) geschoben, indem er leicht zusammengedrückt wird. Der Abstand der Haltearme (1) und (2) zueinander ist so bemessen, daß sie eine ausreichende Klemmwirkung haben, um den jeweiligen Schwamm sicher, jedoch leicht wieder herausnehmbar auch dann zu halten, wenn die vorderen offenen Enden der Haltearme vorzugsweise von der Haftfläche des Saughalters (4) (Fliese, Spiegel u.a.) nach unten gerichtet sind. Die Länge des Verbindungsstücks (3) und damit der Abstand der Haltearme (1) und (2) wird jeweils nach der Höhe/ Stärke der Schwämme bestimmt, für die der Schwammhalter vorgesehen ist.

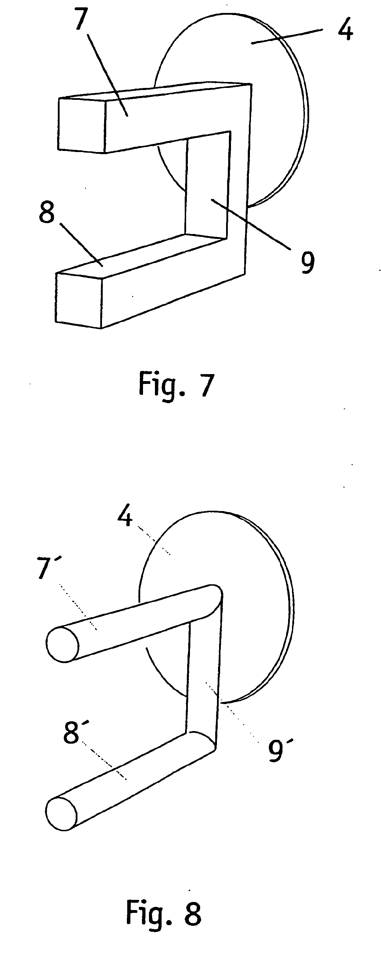

Die Haltearme (1) und (2) sind in ihrem Querschnitt so gestaltet, daß die zum Schwamm gerichtete Oberseite des Haltearms (1) und Unterseite des Haltearms (2) möglichst geringe Teilflächen des eingesetzten Schwamms überdecken. Wie aus Fig. 2 ersichtlich, sind sie dazu bei dem Ausführungsbeispiel gemäß Fig. 1 konvex gestaltet. Sie können im Sinne der Erfindung jedoch auch, wie in Fig. 7 und 8 ersichtlich, schmale gerade Auflageflächen sein oder Kreisabschnitte von Haltearmen mit rundem Querschnitt.

Zusätzlich können die Haltearme auf ihren dem Schwamm zu gerichteten Seiten noppenartig gestaltet sein oder Längs- bzw. Querstege zur sicheren Halterung des eingesetzten Schwamms haben.

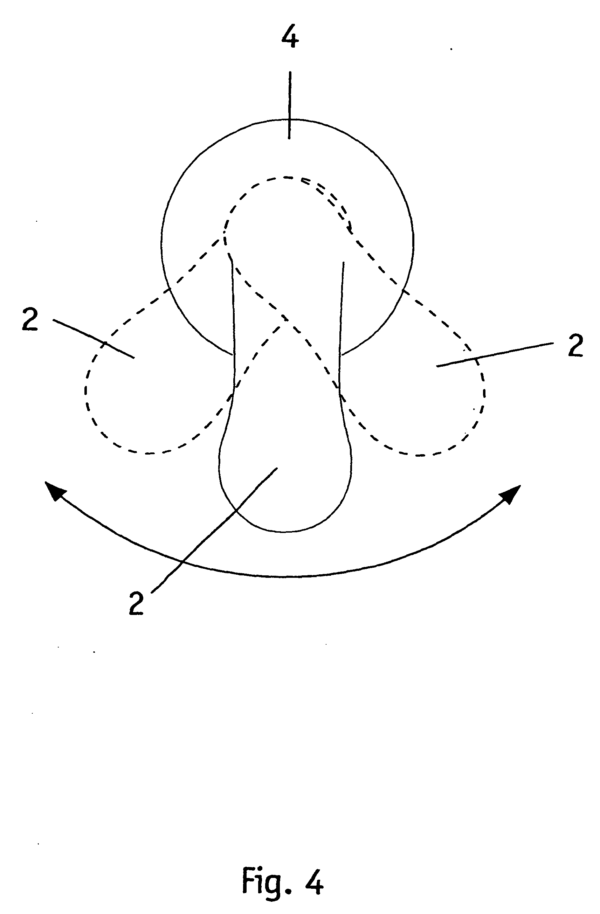

Bei dem in Fig. 3 und 4 dargestellten Ausführungsbeispiel ist der obere Haltearm (2) mit dem Verbindungsstück (3') im unteren Haltearm (1) an dessen einem Längsende waagerecht zu den Haltearmen um die Achse des Verbindungsstücks (3') schwenkbar gelagert. Damit kann das Einsetzen und/oder das Herausnehmen des Schwamms erleichtert werden. Im übrigen entspricht diese Ausführungsform der vorstehend beschriebenen gemäß Fig. 1 und 2.

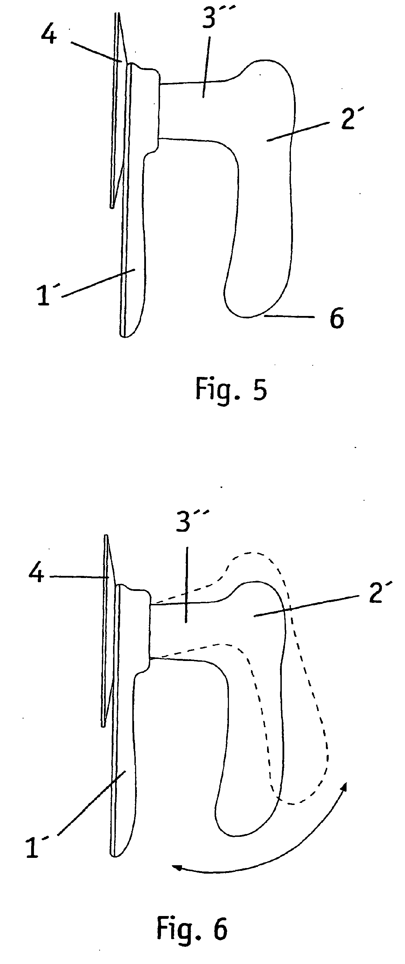

In Fig. 5 und 6 ist ein weiteres Ausführungsbeispiel des Schwammhalters dargestellt, bei dem der obere Haltearm (2') mit dem Verbindungsstück (3") im unteren Haltearm (1') an dessen einem Längsende, vorzugsweise mittels eines Kugelgelenks, nach allen Seiten dreh- und schwenkbar, zumindest jedoch in Richtung vom Haltearm (1) weg schwenk- bzw. klappbar ist.

Bei den weiteren Ausführungsbeispielen des erfindungsgemäßen Schwammhalters gemäß Fig. 7 und 8 sind die Schwammträger derart angeordnet, daß die Verbindungsstücke (9) bzw. (9') parallel zur Haftfläche des Saughalters (4) verlaufen und das offene Ende des Schwammträgers vom Saughalter weggerichtet ist. Die Haltearme (7, 8) bzw. (7', 8') haben dabei in den dargestellten Ausführungsformen rechtwinklige bzw. kreisförmige Querschnitte; sie können jedoch auch die Form der Haltearme (1) und (2) gemäß Fig. 1 bis 6 haben.

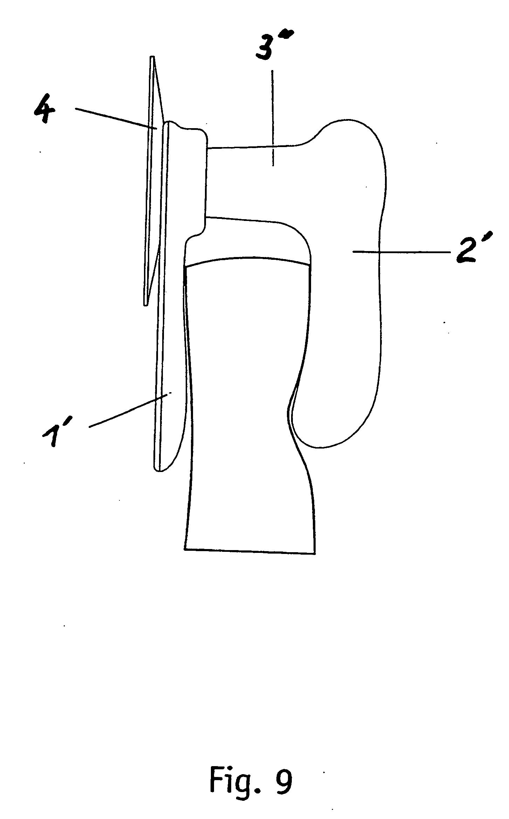

Fig. 9 zeigt schließlich den Schwammhalter in der Ausführungsform gemäß Fig. 5 als Beispiel mit eingesetztem Schwamm.

Im Rahmen der Erfindung liegt es auch, wenn der Schwammträger statt des Saughalters (4) zur Anbringung an der Wand bzw. an der sonstigen Ansatzfläche einen Schraubzapfen, Gewindezapfen oder ein sonstige bekannte Vorrichtung hat.

Durch den erfindungsgemäßen Schwammhalter wird es ermöglicht, den Schwamm, namentlich im feuchten bzw. nassen Zustand nach seiner Benutzung, weitestgehend frei im Raum anzuordnen und nur einen sehr geringen Teil seiner Oberfläche durch die Haltearme des Schwammträgers zu überdecken, ohne das sichere Halten des eingesetzten Schwamms zu beeinträchtigen. Dadurch kann der Schwamm einwandfrei trocknen, da er sich weitestgehend frei im Raum befindet. Dies beschleunigt die Trocknung wesentlich und verhindert sogleich weitestgehend eine Keimbildung im Gegensatz zu der üblichen Ablage des Schwamms in einer Schale oder auf einer sonstigen Fläche. Da der untere Haltearm des Schwammträgers bereits seinerseits nicht an der Wandfläche oder sonstigen Ansatzfläche anliegt, sondern in einem Abstand von dieser angeordnet ist, der insbesondere durch die Höhe des Saughalters bestimmt wird, kann der Schwamm bei dem erfindungsgemäßen Schwammhalter auch nicht an der Wand anliegen, wie es bei einer Aufhängung des Schwamms beispielsweise mittels einer daran angebrachten Schnur oder sonstigen Aufhängevorrichtung geschieht. Der Schwamm wird unter Ausnutzung seiner Elastizität von den Haltearmen des Schwammträgers zugleich sicher gehalten und mühelos in den Schwammhalter einsetzbar und daraus herausnehmbar. Bei den Ausführungsformen gemäß Fig. 3 und 4 sowie Fig. 5 und 6 wird das Einsetzen und Herausnehmen des Schwamms noch zusätzlich erleichtert.

Durch die Anbringung des Schwammhalters an einer Wand, Spiegelfläche oder sonstigen Fläche, vorzugsweise mittels des Saughalters, entfällt auch der Platzbedarf für die Ablegefläche bzw. die Schwammschale bei der üblichen Verwahrung des Schwamms nach seiner Benutzung.

## Patentansprüche

1. Schwammhalter für die lösbare Halterung von Schwämmen außerhalb ihrer Benutzung, **dadurch gekennzeichnet, daß** ein unterer Haltearm (1;1';8;8') und ein dazu im Abstand parallel verlaufender oberer Haltearm (2;2';7;7') durch ein Verbindungsstück (3;3';3";9;9') verbunden sind und einen Schwammträger bilden, in den der Schwamm lösbar eingesetzt wird, wobei die Länge des Verbindungsstücks (3;3';3";9;9') der Höhe/Dicke des Schwamms angepaßt ist, und daß die Haltearme (1,2;1',2';8,7;8',7') an ihren dem eingesetzten Schwamm zugewandten Seiten so gestaltet sind, daß sie jeweils nur eine kleine Angriffsfläche bezüglich des Schwamms aufweisen, und daß der Schwammhalter in bekannter Weise an einer Wand oder sonstigen Tragefläche ansetzbar ist.

2. Schwammhalter nach Anspruch 1, **dadurch gekennzeichnet, daß** der Schwammträger mittels eines Saughalters (4), der auf der Unterseite des unteren Haltearms (1;1') und vom eingesetzten Schwamm abgewandt angeordnet ist, an der Wand oder sonstigen Befestigungsfläche fest, jedoch lösbar ansetzbar ist.

3. Schwammhalter nach Anspruch 1, **dadurch gekennzeichnet, daß** dieser mittels eines Schraubzapfens, eines Gewindezapfens oder in sonstiger Weise an der Wand oder sonstigen Befestigungsfläche anbringbar ist.

4. Schwammhalter nach Anspruch 2 oder Anspruch 3, **dadurch gekennzeichnet, daß** der obere Haltearm(2)um die Längsachse des Verbindungsstücks (3') und waagerecht zur Befestigungsfläche des Schwammhalters schwenkbar ist.

5. Schwammhalter nach Anspruch 2 oder Anspruch 3, **dadurch gekennzeichnet, daß** der obere Haltearm (2') mit dem Verbindungsstück (3") nach der vom unteren Haltearm (1) und der Befestigungsfläche des Schwammhalters abgewandten Seite hochklappbar ist.

6. Schwammhalter nach einem oder mehreren der Ansprüche 1 bis 5, **dadurch gekennzeichnet, daß** die Haltearme (1, 2; 1', 2'; 7, 8; 7', 8') des Schwammhalters parallel zur Befestigungsfläche, wie zum Beispiel zur Wand, angeordnet sind.

7. Schwammhalter nach einem oder mehreren der Ansprüche 1 bis 5, **dadurch gekennzeichnet, daß** die Haltearme (1, 2; 1', 2'; 7, 8; 7', 8') des Schwammhalters im rechten Winkel zur Befestigungsfläche, wie zum Beispiel zur Wand, verlaufen.

8. Schwammhalter nach Anspruch 1 oder einem der Ansprüche 4 bis 7, **dadurch gekennzeichnet, daß** die Haltearme (1, 2; 1', 2'; 7, 8; 7', 8') ovalen, rechteckigen, kreisrunden, drei- oder mehreckigen Querschnitt haben.

9. Schwammhalter nach Anspruch 8, **dadurch gekennzeichnet, daß** die Haltearme (1, 2; 1', 2'; 7, 8; 7', 8') auf ihren dem Schwamm zu gerichteten Seiten noppenartig gestaltet sind oder Längs- und/oder Querstege haben.

## Claims

1. Sponge holder as a detachable retainer for sponges outside their use, **characterised in that** a lower retainer arm (1; 1'; 8; 8') and a parallelly in a certain distance running upper retainer arm (2; 2'; 7; 7') are joined by a connection piece (3; 3'; 3"; 9; 9') to form a sponge bearer, in which the sponge is detachably inserted, whereby the length of the connection piece (3; 3'; 3"; 9; 9') is adapted to the height/thickness of the sponge, and that the retainer arms (1, 2; 1',2'; 8, 7; 8', 7') at their sides facing the inserted sponge are designed in such a way that they only have a small working surface vis-a-vis the sponge, and that the sponge holder can be attached to a wall or other bearing surface in a known manner.

2. Sponge holder as per claim 1, **characterised in that** the sponge bearer is fixed to the wall or another fastening surface, although able to be detached, by means of a suction holder (4) which is arranged on the underside of the lower retainer arm (1, 1') and opposite to the inserted sponge.

3. Sponge holder as per claim 1, **characterised in that** this can be attached to the wall or another fastening surface by means of a screw journal, a threaded journal or by some other manner.

4. Sponge holder as per claim 2 or claim 3, **characterised in that** the upper retainer arm (2) can be swivelled through the longitudinal axis of the connection piece (3') and horizontally to the fastening suface of the sponge holder.

5. Sponge holder as per claim 2 or claim 3, **characterised in that** the upper retainer arm (2') can be folded upwards with the connection piece (3") to the side opposite the lower retainer arm (1) and the fastening surface of the sponge holder.

6. Sponge holder as per one or more of the claims 1 to 5, **characterised in that** the retainer arms (1, 2; 1', 2'; 7, 8; 7', 8') of the sponge holder are arranged parallelly to the fastening surface, such as to the wall.

7. Sponge holder as per one or more of the claims 1 to 5, **characterised in that** the retainer arms (1, 2; 1', 2'; 7, 8; 7', 8') of the sponge holder run at a right angle to the fastening surface, such as to the wall.

8. Sponge holder as per claim 1 or one of the claims 4 to 7, **characterised in that** the retainer arms (1, 2; 1',2'; 7, 8; 7', 8') have oval, rectangular, circular, triangular ot polyonal cross-sections.

9. Sponge holder as per claim 8, **characterised in that** the retainer arms (1, 2; 1', 2'; 7, 8; 7', 8') have a knobbed design on the sides facing the sponge or have longitudinal and/or lateral ribs.

## Revendications

1. Porte-éponge pour la fixation amovible des éponges en dehors de leur utilisation, **caractérisé en ce qu'**un bras de support en bas (1; 1'; 8; 8') et un bras de support en haut (2; 2'; 7; 7') placés parallèlement à un certain écart, sont reliés par une pièce de raccord (3; 3'; 3"; 9; 9') et forment un porte-éponge dans lequel l'éponge est placée de manière amovible, la longueur de la pièce de raccord (3; 3'; 3"; 9; 9') étant adaptée à la hauteur/épaisseur de l'eponge, et **en ce que** les bras de support (1, 2; 1', 2'; 8, 7; 8', 7') ont, du côté tourné vers l' éponge utilisée, une forme telle qu'ils ne présentent respectivement qu'une petite surface d'application par rapport à l'éponge et que le porte-éponge est fixable de manière connue à un mur ou toute autre surface de support.

2. Porte-éponge selon la revendication 1, **caractérisé en ce que** le support de l'éponge est fixable, mais de manière amovible, sur le mur ou toute autre surface de fixation, au moyen d'une ventouse (4) disposée sur le côté inférieur du bras de support en bas (1; 1') et opposé à l'éponge placée.

3. Porte-éponge selon la revendication 1, **caractérisé en ce qu'**il peut être fixé au moyen d'une cheville de vissage, d'une goupille filetée ou de toute autre manière sur le mur ou toute autre surface de fixation.

4. Porte-éponge selon la revendication 2 ou la revendication 3, **caractérisé en ce que** le bras de support placé en haut (2) est pivotable sur l'axe longitudinal de la pièce de raccord (3') et horizontalement par rapport à la surface de fixation du porte-éponge.

5. Porte-éponge selon la revendication 2 ou la revendication 3, **caractérisé en ce que** la bras de support placé en haut (2') avec la pièce de raccord (3") peut être replié vers le haut vers le côté opposé au bras de support placé en bas (1) et à la surface de fixation du porte-éponge.

6. Porte-éponge selon une ou plusieurs des revendications 1 à 5, **caractérisé en ce que** les bras de support (1, 2; 1', 2', 7, 8; 7', 8') du porte-éponge sont disposés parallèlement à la surface de fixation, comme par exemple au mur.

7. Porte-éponge selon une ou plusieurs des revendications 1 à 5, **caractérisé en ce que** les bras de support (1, 2; 1',2'; 7, 8; 7', 8') du porte-éponge sont placés en angle droit par rapport à la surface de fixation, comme par exemple au mur.

8. Porte-éponge selon la revendication1 ou une des revendications 4 à 7, **caractérisé en ce que** les bras de support (1, 2; 1', 2'; 7, 8; 7', 8') ont une coupe ovale, rectangulaire, circulaire, triangulaire ou polygonale.

9. Porte-èponge selon la revendication 8, **caractérisé en ce que** les bras de support (1, 2; 1',2',7,8; 7', 8') sont boulochés sur les côtés tournés vers l'éponge ou comportent des raies longitudinales ou transversales.
